# EUROPEAN PATENT SPECIFICATION

(11) **EP 4 407 201 B1**
(45) Date of publication and mention of the grant of the patent: **14.05.2025**
(21) Application number: 24153577.2
(22) Date of filing: 24.01.2024
(51) Int. Cl.: F16C 33/58, F16C 33/78

(54) **BEARING UNIT FOR ROTARY SHAFTS**
LAGEREINHEIT FÜR ROTIERENDE WELLEN
UNITÉ DE PALIER POUR ARBRES ROTATIFS

(30) Priority: 27.01.2023 IT 202300001266
(43) Date of publication of application: 31.07.2024
(73) Proprietor: Aktiebolaget SKF, 415 50 Göteborg (SE)
(72) Inventor: Frezza, Pasquale, 81031 Aversa (CE) (IT); Bertolini, Andrea A, 54033 Carrara (IT); Berti, Renato, 54100 Massa (IT)
(74) Representative: Tedeschini, Luca

(56) References cited:
- WO-A1-2010/136058
- CN-A- 101 265 949
- FR-A5- 2 249 573

## Description

### Technical field of the invention

The present invention relates to a bearing unit.

More specifically, the present invention relates to a bearing unit for supporting one end of a rotary shaft, as specified below, but is generally applicable.

### Prior art

To support rotary shafts in industrial machinery, support assemblies for rotary shafts of a known type comprise a cup-shaped flanged casing, i.e. a casing with a closed bottom, and a bearing unit provided with an outer ring, an inner ring, and a plurality of rolling bodies interposed between the inner ring and the outer ring. The outer ring is stationary, while the inner ring is rotary and constrained to rotate with the rotary shaft.

On the side opposite the closed bottom of the outer ring, a sealing device is seated between the outer ring and the inner ring to seal the bearing unit against external contaminants. The sealing device is provided with a shaped metal shield interference fitted on the outer ring, which has an elastomer lining. The elastomer lining is provided with a pair of contacting lips that make sliding contact with the inner ring to create a seal against external contaminants.

However, such bearing units do not guarantee an effective seal, in particular in very contaminated environments. The most common request received from end users is for a high-performance sealing solution incorporating more than two contacting lips. Such a solution firstly reduces the risk of contamination, and secondly increases frictional resistance during operation, such resistance resulting in greater power losses.

An acceptable trade-off between minimum frictional resistance and high sealing performance is therefore sought after. However, it is not currently possible to provide a solution with good sealing performance and low frictional resistance (i.e. low power losses) without making a dedicated component for the specific application. Such components thus require customized elements for the mechanical interfaces of the specific application. This inevitably affects standardization and increases the cost of the bearing unit.

Document FR2249573A5 discloses a rolling bearing having an outer race and an inner race. The outer race is provided with a groove near its end face to retain the rim of the metal housing of the seal. The rubber seal is bonded to the housing and has three flexible ribs.

Document WO2010/136058A1 discloses a bearing seal assembly including a metal shield and a resilient multi-lip sealing gasket secured to the metal shield. The metal shield is supported in use by an outer ring of a rolling contact bearing and includes a diagonally extending central portion. The sealing gasket provides a number of contacting lips facing an inner ring of the rolling contact bearing.

Document CN101265949A relates to a three-lip contact-type sealing bearing which comprises a bearing outer ring, a bearing inner race, a retainer, a rolling body and a sealing ring, wherein the sealing ring is provided with a sealing element and a frame; three parallel contacting lips are arranged at the inside circumference of the sealing element and closely contact the external diametric plane of the bearing inner race.

### Summary of the invention

The present invention is intended to provide a bearing unit for supporting one end of a rotary shaft that does not have the drawbacks described above, i.e. that has a sealing device with good sealing performance and low frictional resistance.

The present invention provides a bearing unit having the features set out in the attached claims.

### Brief description of the drawings

The invention is described below with reference to the attached drawings, which show some non-limiting example embodiments of the invention, in which:
- Figure 1 shows a cross section of a first and preferred embodiment of a bearing unit according to the present invention,
- Figure 2 is a magnified cross-section view of a sealing device of the bearing unit in Figure 1,
- Figure 3 is a magnified cross-section view of the sealing device in Figure 2 when in use, and
- Figure 4 is a graph showing the features of the sealing device in Figure 2.

### Detailed description

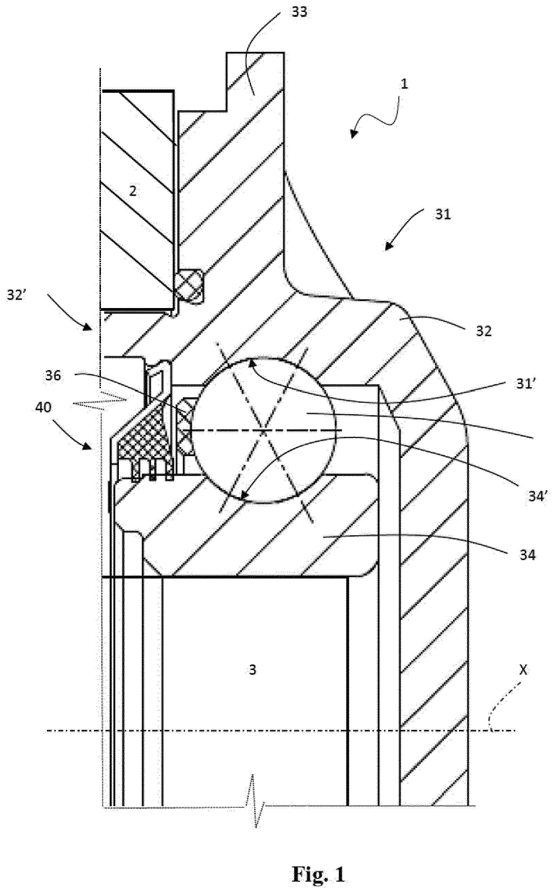

In Figure 1, reference sign 1 denotes a bearing unit as a whole, according to a first and preferred embodiment of the present invention. The bearing unit 1 can be interposed between a first mechanical element 2 and a second mechanical element 3 of a machine preferably, but not exclusively, comprising a static frame 2 and a rotary shaft 3. Both the static frame and the rotary shaft are known and therefore are shown only schematically in the figure.

Throughout the present description and in the claims, terms and expressions indicating positions and orientations, such as "radial" and "axial", are to be understood with reference to the central axis of rotation X of the bearing unit 1.

The bearing unit 1 has a central axis X and comprises:
- a stationary radially outer ring 31 provided with a raceway 31'. The radially outer ring 31 could in turn comprise a cup-shaped casing 32, i.e. a casing with a closed bottom, that is open at the axially outer end 32' thereof, and a flange 33 transverse to the axis X and rigidly connected to the casing 32 and stably connected to the static frame 2,
- a rotary radially inner ring 34 provided with a raceway 34' and stably connected to the rotary shaft 3,
- a plurality of rolling bodies 35, specifically balls, interposed between the radially outer ring 31 and the radially inner ring 34 to enable relative rotation between the radially inner ring 34 and the radially outer ring 31,
- a cage 36 for the plurality of rolling bodies, and
- a sealing device 40 arranged between the radially outer ring 31 and the radially inner ring 34 at the axially outer end 32' of the radially outer ring 31.

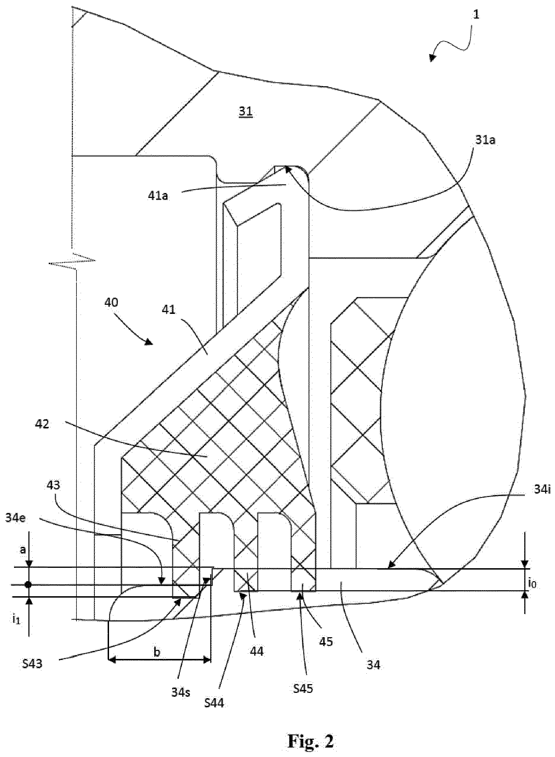

With reference to Figure 2, the sealing device 40 is provided with:
- a shaped shield 41 that is stably mounted on the radially outer ring 31 by inserting a radially outer folded edge 41a thereof into a radially inner groove 31a of the radially outer ring,
- an elastomer lining 42 arranged on the shaped shield 41 and axially inside said shaped shield 41. The elastomer lining has substantially radial contacting lips 43, 44, 45 that are preferably of substantially the same radial length, and that provide a sliding contact, when in use, on a radially outer first surface 34e and a radially outer second surface 34i of the radially inner ring 34.

There are more than two contacting lips to ensure excellent sealing performance. In the preferred solution shown in the attached figures, there are three contacting lips, specifically an axially outer lip 43, a first axially inner lip 44, and a second axially inner lip 45.

When in use, the contacting lips 43, 44, 45 provide a sliding contact with the radially inner ring 34 caused by radial interference i₀, i₁ between the corresponding radially inner surfaces S43, S44, S45 of the contacting lips 43, 44, 45 and the radially outer surfaces 34e, 34i of the radially inner ring 34.

In particular, the radial interference i₀ is the interference between corresponding radially inner surfaces S44, S45 of the axially inner lips 44, 45 and the first surface 34i of the radially inner ring 34. The value of this radial interference is usually between 0.25 mm and 0.9 mm. Conversely, the interference i₁ is the interference between the radially inner surface S43 of the axially outer lip 43 and the second surface 34e of the radially inner ring 34.

According to the invention, the radially inner ring 34 has a step 34s so that the first surface 34i is radially more external than the second surface 34e by the radial length "a" of the step 34s. Consequently, the radial interference i₁ of the axially outer lip 43 is less than the radial interference i₀. The difference between the two radial interference values is preferably equal to the radial length "a" of the step 34s.

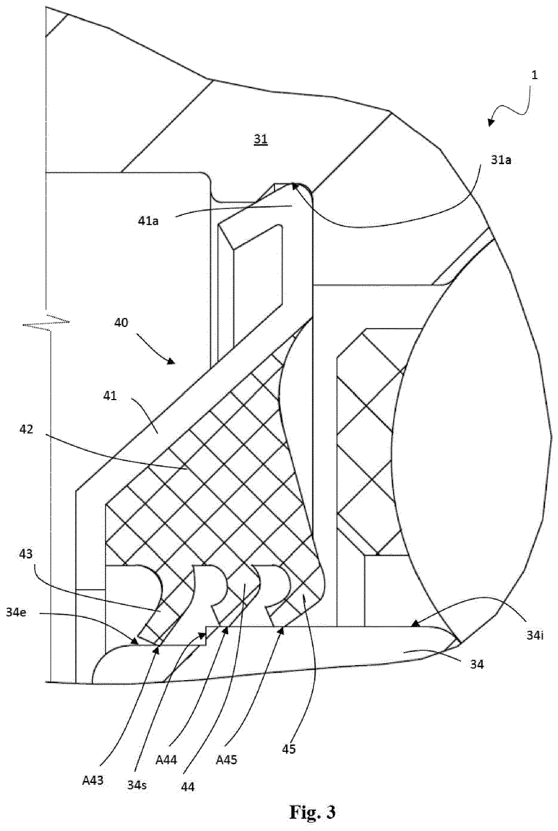

Also, with reference to Figure 3, this means that the axially outer lip 43 is deformed less than the axially inner lips 44, 45 when in use. Lesser deformation means a lower contact force exchanged between the axially outer lip 43 and the radially inner ring 34 (lower compared to the force exchanged between the axially inner lips 44, 45 and the radially inner ring 34), which results in less frictional resistance related to the addition of a third contacting lip.

Furthermore, lesser deformation of the axially outer lip 43 entails a "distension" of said lip and therefore a contact area A43 between the axially outer lip 43 and the radially inner ring 34 that is smaller than the corresponding contact areas A44, A45 between the axially inner lips 44, 45 and the radially inner ring 34, which results in greater contact pressure between the axially outer lip 43 and the radially inner ring 34 and therefore a better seal.

The addition of a third lip 43 (or further lips in addition to the two axially inner lips 44, 45) coupled with the second surface 34e of the radially outer ring (surface recessed in relation to the first surface 34i) therefore has a negligible effect on the overall frictional resistance of the sealing device, but simultaneously significantly increases sealing performance.

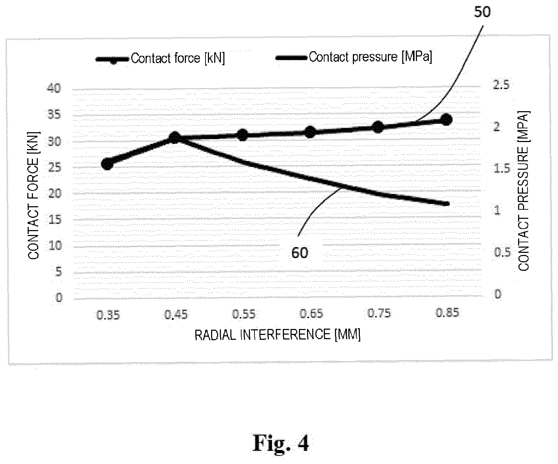

The foregoing is shown in the graph in Figure 4, which relates to a finite-element simulation to characterize the sealing device. The X-axis of the graph shows the radial interference values in [mm] between the contacting lip and the radially inner ring. The two Y-axes show, for the same components, the values of the contact force 50 in [kN] and the values of the contact pressure 60 in [MPa] as the radial interference varies.

As shown, the contact force between the lip and the inner ring decreases as the radial interference decreases, thereby reducing frictional resistance and power loss. Simultaneously, decreasing radial interference to an interference limit value of approximately 0.45 mm increases the contact pressure between the lip and the inner ring. This is because reducing the radial interference distends the lip, thereby reducing the contact area between the lip and the inner ring, which increases the contact pressure and improves seal performance. For radial interference values below 0.45 mm, the lip is substantially distended, and therefore there is no more variation in the contact area between the lip and the inner ring, the area remaining near-constant as the radial interference varies. Consequently, with equal contact areas, the contact pressure follows the trend of the contact force, i.e. lessens as radial interference decreases.

Consequently, combining the axially outer lip 43 with the two axially inner lips 44, 45 improves the seal (greater contact pressure) without excessively affecting frictional resistance (lower contact force).

Advantageously, the radial length of the step 34s may be such as to guarantee a radial interference i₁ between the axially outer lip 43 and the radially inner ring 34 of not less than 0.5 mm. The radial interference value is therefore found on the curve 60, which shows that contact pressure increases as radial interference decreases.

Preferably and depending on the specific application, the radial length "a" may be between 0.5 mm and 0.85 mm.

The axial width of the second surface 34e (i.e. the recessed surface of the radially inner ring) may advantageously be between 4 mm and 6 mm. Values below 4 mm risk the step 34s interfering with the axially outer lip 43, while values greater than 6 mm risk the step 34s interfering with the axially inner lip 44 closest to the axially outer lip 43 (in the example illustrated, the intermediate lip 44).

In short, the present solution is an optimal trade-off between sealing performance and frictional resistance. With regard to a sealing device with two contacting lips according to the prior art, the described solution provides greater sealing performance, while keeping power losses caused by sliding friction within acceptable limits.

Furthermore, the identified solution:
- enables use of a sealing device with three lips (or in any case with more than two lips) without requiring a customized shape for the specific application,
- requires a simple machining of the radially inner ring to create a step with a recessed surface that can be easily coupled with the axially outer lip,
- the step formed on the radially inner ring confers the described advantages: low contact force but high contact pressure between the lip and the ring,
- the step formed on the radially inner ring does not adversely affect the mechanical strength of the ring since it is remote from the most stressed zone, which is the raceway,
- in any case, the step represents a reduction in material, making the radially inner ring more lightweight.

In addition to the embodiments described above, numerous other variants of the invention are possible. Such embodiments should be understood to be examples and do not limit the scope, applications or possible configurations of the invention. Indeed, although the description provided above enables the person skilled in the art to carry out the present invention at least according to one example configuration thereof, numerous variations of the components described could be used without thereby moving outside the scope of the invention, as defined in the attached claims.

## Claims

1. Bearing unit (1) having a central axis (X) and provided with:
- a radially outer ring (31), stationary,
- a radially inner ring (34), rotatable,
- a plurality of rolling bodies interposed between the inner ring and the outer ring,
- a sealing device (40), arranged between the radially outer ring (31) and the radially inner ring (34), and in turn comprising:
- a shaped shield (41) which is mounted stably on the radially outer ring (31), e
- an elastomer lining (42), supported by the shaped shield (41), which has contacting lips (43, 44, 45), radial and more than two in number, the bearing unit (1) being **characterized by** the fact that, in combination:
- the contacting lips (43, 44, 45) ensure in use a sliding contact on a first surface (34e) and on a second surface (34i) of the radially internal ring (34), both radially external,
- the radially inner ring (34) has a step (34s) so that:
- the first surface (34i) is radially more external than the second surface (34e) by the radial length (a) of the step (34s),
- a radial interference (i₁) between an axially outer lip (43) and the radially inner ring (34) is smaller than a radial interference (i₀) between axially inner lips (44, 45) and the radially inner ring (34),
- the radial interference (i₀) between axially inner lips (44, 45) and the radially inner ring (34) is defined between corresponding radially inner surfaces (S44, S45) of the axially inner lips (44, 45) and the first surface (34i) of the radially inner ring (34) and
- the radial interference (i₁) between the axially outer lip (43) and the radially inner ring (34) is defined between a radially inner surface (S43) of the axially outer lip (43) and the second surface (34e) of the radially inner ring (34).

2. Bearing unit according to claim 1, wherein the radial interference (i₁) between the axially outer lip (43) and the radially inner ring (34) is smaller than the radial interference (i₀) between axially inner lips (44, 45) and the radially inner ring (34) by the radial length (a) of the step (34s).

3. Bearing unit according to claim 2, wherein the number of contacting lips (43, 44, 45) is equal to three and the contacting lips comprise the axially outer lip (43), a first axially inner lip (44) and a second axially inner lip (45).

4. Bearing unit according to any of the preceding claims, wherein a contact area (A43) between the axially outer lip (43) and the radially inner ring (34) is smaller than the corresponding contact areas (A44, A45) between the axially inner lips (44, 45) and the radially inner ring (34).

5. Bearing unit according to any of the preceding claims, wherein the radial length (a) of the step (34s) is such that the radial interference (i1) between the axially outer lip (43) and the radially inner ring (34) is not less than 0.5 mm.

6. Bearing unit according to any of the preceding claims, wherein the radial length (a) is between 0.5 mm and 0.85 mm.

7. Bearing unit according to any of claims from 3 to 6, wherein an axial width of the second surface (34e) of the radially inner ring (34) is between 4 mm and 6 mm.

## Patentansprüche

1. Lagereinheit (1), die eine Mittelachse (X) aufweist und mit Folgendem versehen ist:
- einem radial äußeren Ring (31), stationär,
- einem radial inneren Ring (34), drehbar,
- mehreren Wälzkörpern, die zwischen dem inneren Ring und dem äußeren Ring angeordnet sind,
- einer Dichtungsvorrichtung (40), die zwischen dem radial äußeren Ring (31) und dem radial inneren Ring (34) angeordnet ist und wiederum Folgendes umfasst:
- eine geformte Abschirmung (41), die fest auf dem radial äußeren Ring (31) montiert ist,
- eine von der geformten Abschirmung (41) getragene Elastomerauskleidung (42), die Kontaktlippen (43, 44, 45) aufweist, die radial und in der Anzahl mehr als zwei sind, wobei die Lagereinheit (1) **dadurch gekennzeichnet ist, dass** in Kombination:
- die Kontaktlippen (43, 44, 45) im Gebrauch einen Gleitkontakt auf einer ersten Fläche (34e) und auf einer zweiten Fläche (34i) des radial inneren Rings (34), beide radial außen, sicherstellen,
- der radial innere Ring (34) eine Stufe (34s) aufweist, so dass:
- die erste Fläche (34i) um die radiale Länge (a) der Stufe (34s) radial weiter außen als die zweite Fläche (34e) ist,
- eine radiale Interferenz (i₁) zwischen einer axial äußeren Lippe (43) und dem radial inneren Ring (34) kleiner als eine radiale Interferenz (i₀) zwischen axial inneren Lippen (44, 45) und dem radial inneren Ring (34) ist,
- die radiale Interferenz (i₀) zwischen axial inneren Lippen (44, 45) und dem radial inneren Ring (34) zwischen entsprechenden radial inneren Flächen (S44, S45) der axial inneren Lippen (44, 45) und der ersten Fläche (34i) des radial inneren Rings (34) definiert ist, und
- die radiale Interferenz (i₁) zwischen der axial äußeren Lippe (43) und dem radial inneren Ring (34) zwischen einer radial inneren Fläche (S43) der axial äußeren Lippe (43) und der zweiten Fläche (34e) des radial inneren Rings (34) definiert ist.

2. Lagereinheit nach Anspruch 1, wobei die radiale Interferenz (i₁) zwischen der axial äußeren Lippe (43) und dem radial inneren Ring (34) um die radiale Länge (a) der Stufe (34s) kleiner als die radiale Interferenz (i₀) zwischen axial inneren Lippen (44, 45) und dem radial inneren Ring (34) ist.

3. Lagereinheit nach Anspruch 2, wobei die Anzahl der Kontaktlippen (43, 44, 45) gleich drei ist und die Kontaktlippen die axial äußere Lippe (43), eine erste axial innere Lippe (44) und eine zweite axial innere Lippe (45) umfassen.

4. Lagereinheit nach einem der vorhergehenden Ansprüche, wobei ein Kontaktbereich (A43) zwischen der axial äußeren Lippe (43) und dem radial inneren Ring (34) kleiner als die entsprechenden Kontaktbereiche (A44, A45) zwischen den axial inneren Lippen (44, 45) und dem radial inneren Ring (34) ist.

5. Lagereinheit nach einem der vorhergehenden Ansprüche, wobei die radiale Länge (a) der Stufe (34s) derart ist, dass die radiale Interferenz (i1) zwischen der axial äußeren Lippe (43) und dem radial inneren Ring (34) nicht kleiner als 0,5 mm ist.

6. Lagereinheit nach einem der vorhergehenden Ansprüche, wobei die radiale Länge (a) zwischen 0,5 mm und 0,85 mm liegt.

7. Lagereinheit nach einem der Ansprüche 3 bis 6, wobei eine axiale Breite der zweiten Fläche (34e) des radial inneren Rings (34) zwischen 4 mm und 6 mm liegt.

## Revendications

1. Unité de palier (1) comportant un axe central (X) et pourvue de :
- une bague radialement externe (31), fixe,
- une bague radialement interne (34), rotative,
- une pluralité de corps roulants interposés entre la bague interne et la bague externe,
- un dispositif d'étanchéité (40), disposé entre la bague radialement externe (31) et la bague radialement interne (34), et à son tour comprenant :
- un bouclier façonné (41) qui est monté de manière stable sur la bague radialement externe (31),
- un revêtement en élastomère (42), supporté par le bouclier façonné (41), qui présente des lèvres de contact (43, 44, 45), radiales et en nombre supérieur à deux, l'unité de palier (1) étant **caractérisée en ce que**, en combinaison :
- les lèvres de contact (43, 44, 45) assurent lors de l'utilisation un contact coulissant sur une première surface (34e) et sur une seconde surface (34i) de la bague radialement interne (34), toutes deux radialement externes,
- la bague radialement interne (34) présente un décrochement (34s) de sorte que :
- la première surface (34i) soit radialement plus externe que la seconde surface (34e) par la longueur radiale (a) du décrochement (34s),
- une interférence radiale (i₁) entre une lèvre axialement externe (43) et la bague radialement interne (34) soit plus petite qu'une interférence radiale (i₀) entre les lèvres axialement internes (44, 45) et la bague radialement interne (34),
- l'interférence radiale (i₀) entre les lèvres axialement internes (44, 45) et la bague radialement interne (34) soit définie entre les surfaces radialement internes (S44, S45) correspondantes des lèvres axialement internes (44, 45) et la première surface (34i) de la bague radialement interne (34) et
- l'interférence radiale (i₁) entre la lèvre axialement externe (43) et la bague radialement interne (34) soit définie entre une surface radialement interne (S43) de la lèvre axialement externe (43) et la seconde surface (34e) de la bague radialement interne (34).

2. Unité de palier selon la revendication 1, l'interférence radiale (i₁) entre la lèvre axialement externe (43) et la bague radialement interne (34) étant plus petite que l'interférence radiale (i₀) entre les lèvres axialement internes (44, 45) et la bague radialement interne (34) par la longueur radiale (a) du décrochement (34s).

3. Unité de palier selon la revendication 2, le nombre de lèvres de contact (43, 44, 45) étant égal à trois et les lèvres de contact comprenant la lèvre axialement externe (43), une première lèvre axialement interne (44) et une seconde lèvre axialement interne (45).

4. Unité de palier selon l'une quelconque des revendications précédentes, une zone de contact (A43) entre la lèvre axialement externe (43) et la bague radialement interne (34) étant plus petite que les zones de contact (A44, A45) correspondantes entre les lèvres axialement internes (44, 45) et la bague radialement interne (34).

5. Unité de palier selon l'une quelconque des revendications précédentes, la longueur radiale (a) du décrochement (34s) étant telle que l'interférence radiale (i1) entre la lèvre axialement externe (43) et la bague radialement interne (34) n'est pas inférieure à 0,5 mm.

6. Unité de palier selon l'une quelconque revendications précédentes, la longueur radiale (a) étant comprise entre 0,5 mm et 0,85 mm.

7. Unité de palier selon l'une quelconque des revendications 3 à 6, une largeur axiale de la seconde surface (34e) de la bague radialement interne (34) étant comprise entre 4 mm et 6 mm.
